# EUROPÄISCHE PATENTSCHRIFT

(11) **EP 3 708 453 B1**
(45) Veröffentlichungstag und Bekanntmachung des Hinweises auf die Patenterteilung: **12.10.2022**
(21) Anmeldenummer: 19163057.3
(22) Anmeldetag: 15.03.2019
(51) Int. Cl.: B61F 1/00, B61F 1/08, B62D 21/02, B62D 21/12, B62D 25/00

(54) **UNTERGESTELL FÜR FAHRZEUGE UND FAHRZEUG**
SUBFRAME FOR VEHICLES AND VEHICLE
CHÂSSIS POUR VÉHICULES ET VÉHICULE

(43) Veröffentlichungstag der Anmeldung: 16.09.2020
(73) Patentinhaber: Schweizerische Bundesbahnen SBB, 3000 Bern (CH)
(72) Erfinder: Schmitt, Wolfram, 55283 Nierstein (DE); Huse, Philipp, 60314 Frankfurt (DE); Maurer, Marc, 65183 Wiesbaden (DE); Hügl, Alexander, 04277 Leipzig (DE); Juntke, Mike, 09669 Frankenberg (DE)
(74) Vertreter: Rutz & Partner

(56) Entgegenhaltungen:
- AT-A1- 520 110
- AT-B- 394 531
- DE-C- 721 550
- GB-A- 191 500 356
- US-A- 664 646
- US-A- 893 948
- US-A- 2 099 164

## Beschreibung

Die Erfindung betrifft ein Untergestell für ein Fahrzeug, insbesondere für einen Lastwagen oder ein Schienenfahrzeug, sowie ein Fahrzeug, insbesondere einen Lastwagen oder ein Schienenfahrzeug, insbesondere einen Güterwagen, mit einem solchen Untergestell.

Aus der DE3911138A1 ist ein Untergestell für Eisenbahngüterwagen bekannt, das einen mittleren Längsträger und zwei Aussenlängsträger aufweist, die durch Querträger sowie Kopfträger miteinander verbunden sind.

Die CH472308A offenbart ein Rahmentragwerk für Eisenbahnfahrzeuge mit zwei zentral angeordneten Hauptlängsträgern, die zur Aufnahme der betriebsmässigen Biege-und Knickbelastungen dimensioniert sind und die durch Querstreben mit Aussenlängsträgern verbunden sind, die als durchgehende Profilträger zur Aufnahme der örtlichen Last ausgebildet sind.

Die EP0184096A2 offenbart ein Untergestell für Schienenfahrzeuge, insbesondere Güterwagen, mit zwei Aussenlängsträgern, die durch Kopfträger und nachgeordnete Querträger sowie durch diagonal angeordnete Zugglieder miteinander verbunden sind.

Schienenfahrzeuge mit solchen Untergestellen sind z.B. auch aus Publikationen der schweizerischen Bundesbahnen bekannt. Zweiachsige Flachwagen vom Typ Ks, die einen Unterbau mit zwei Aussenlängsträgern in Fischbauchtechnik umfassen, weisen ein maximales Ladegewicht von etwa 30 t, ein Eigengewicht (mittlere Tara) von etwa 12 t und eine Ladelänge von etwa 12.5 m auf.

Vierachsige Flachwagen vom Typ Res, die einen Unterbau mit zwei Aussenlängsträgern in Fischbauchtechnik umfassen, weisen ein maximales Ladegewicht von etwa 55 t, ein Eigengewicht (mittlere Tara) von etwa 25 t und eine Ladelänge von etwa 18.5 m auf.

Das Eigengewicht dieser Schienenfahrzeuge ist relativ hoch im Verhältnis zum maximalen Ladegewicht. Das Untergestell, welches das Eigengewicht und das Ladegewicht tragen soll, muss entsprechend der Bruttolast ausgelegt sein. Durch eine Reduktion des Eigengewichts bzw. Tara könnte bei gleichbleibender Tragfähigkeit bzw. Bruttolast des Untergestells das maximale Ladegewicht bzw. Nettolast entsprechend erhöht werden.

Das Untergestell bekannter Schienenfahrzeuge wird mit hohem Arbeitsaufwand hergestellt. Dabei werden in der Regel Vorrichtungsteile eingesetzt, die speziell für einen bestimmten Wagentyp gefertigt werden. Sofern ein Untergestell mit geänderten Spezifikationen hergestellt werden soll, werden in der Regel wiederum typenspezifische Vorrichtungsteile benötigt.

Die Vorrichtungsteile werden in der Regel mit hohem Arbeitsaufwand miteinander verschweisst. Schweissarbeiten werden dabei regelmässig manuell durchgeführt.

Nebst einem hohen Aufwand für die Herstellung erfordern konventionelle Untergestelle typischerweise auch einen hohen Aufwand für Wartungsarbeiten und Instandstellungsarbeiten, z.B. nach einem Unfall oder einer Entgleisung.

Konsequenterweise ergeben sich für die Herstellung, den Unterhalt und die Instandstellung bekannter Untergestelle und somit für Fahrzeuge mit solchen Untergestellen über die gesamte Betriebszeit erhebliche Kosten.

Aus der US2099164A, der AT394531B und der DE721550C sind weitere Untergestelle für Eisenbahnwagen bekannt, die einen mittleren Längsträger aufweisen.

Der vorliegenden Erfindung liegt daher die Aufgabe zugrunde, ein verbessertes Untergestell für ein Fahrzeug, insbesondere für einen Lastwagen oder ein Schienenfahrzeug, sowie ein Fahrzeug, insbesondere einen Lastwagen oder ein Schienenfahrzeug, mit einem solchen Untergestell zu schaffen.

Insbesondere ist ein Untergestell zu schaffen, welches ein reduziertes Eigengewicht aufweist und somit bei gleich hoher Brutto-Belastbarkeit eine entsprechend höhere Netto-Last aufnehmen kann.

Das Untergestell, welches beidseitig auf Laufvorrichtungen, wie Radsätzen oder Drehgestellen abgestützt wird, soll mit reduziertem Aufwand hergestellt, gewartet und nach Auftreten eines Schadens wieder instand gestellt werden können. Nach Ausserverkehrsetzung der Untergestelle sollen Untergestelle zudem vorteilhaft wieder in Einzelteile zerlegt werden können, die vorzugsweise weiter verwertbar sind.

Ferner soll der Aufwand für die Planung von Untergestellen, die gemäss vom Anwender wahlweise vorgegebenen Spezifikationen gefertigt werden, deutlich reduziert werden.

Erfindungsgemässe Untergestelle und Fahrzeuge sollen nach Erhalt einer Bestellung mit beliebigen Spezifikationen zudem in kürzerer Zeit gefertigt werden können.

Für die Fertigung und Lagerung erfindungsgemässer Untergestelle soll zudem weniger Raum benötigt werden.

Vorrichtungsteile, welche individuell für ein spezifiziertes Untergestell zu fertigen sind, sollen weitgehend vermieden werden.

Das erfindungsgemässe Untergestell mit seinen Vorrichtungsteilen soll hinsichtlich der Abmessungen und Belastbarkeit mit geringem Aufwand skalierbar sein. Vorzugsweise sollen Untergestelle mit wahlweise festgelegten Spezifikationen durch einfache Dimensionierung von Vorrichtungsteilen realisierbar sein.

Die Untergestelle sollen insbesondere hinsichtlich der maximal aufzunehmenden Traglast skalierbar sein, sodass Lastgrenzen bestehender Untergestelle auch erweitert werden können. Dabei sollen Lastgrenzen erhöht werden können, ohne dass Änderungen der geometrischen Abmessungen oder der Struktur des Untergestells erforderlich sind. Eine höhere Belastbarkeit soll jeweils mit einfachen Mitteln und ohne wesentliche Gewichtszunahme realisierbar sein.

Weiterhin sollen der Zusammenbau und die Verbindung der Vorrichtungsteile erfindungsgemässer Untergestelle vereinfacht und gegebenenfalls automatisiert durchgeführt werden können. Schweissarbeiten sollen vorzugsweise vermieden oder durch Roboter in einfacher Weise ausgeführt werden können.

Die Kraftverläufe innerhalb der Vorrichtungsteile des Untergestells sollen besonders vorteilhaft sein, sodass auch nach langer Betriebsdauer erfindungsgemässer Fahrzeuge keine störenden Verformungen auftreten.

Diese Aufgabe wird mit einem Untergestell und mit einem Fahrzeug gelöst, welche die in Anspruch 1 bzw. 15 angegebenen Merkmale aufweisen. Vorteilhafte Ausgestaltungen der Erfindung sind in weiteren Ansprüchen angegeben.

Das Untergestell, das für ein Fahrzeug, wie ein Schienenfahrzeug, z.B. Güterwagen, oder einen Lastwagen, insbesondere einen Sattelschlepper, vorgesehen ist, umfasst ein entlang einer Längsachse ausgerichtetes Rahmentragwerk, welches zwei äussere Tragstrukturen aufweist, die durch eine Verbindungstruktur miteinander verbunden sind. Erfindungsgemäss sind die äusseren Tragstrukturen als ebene oder räumliche Fachwerkstrukturen aufgebaut, die seriell miteinander verbundene Fachwerkprofile aufweisen, die einen oberen Längsträger und einen unteren Längsträger derart miteinander verbinden, dass jeweils zwei benachbarte Fachwerkprofile zusammen mit dem oberen oder unteren Längsträger ein Dreieck mit drei Knotenpunkten bilden.

Erfindungsgemäss wird eine Verbindungstruktur mit einer räumlichen Fachwerkstruktur eingesetzt.

Die äusseren Tragstrukturen des erfindungsgemässen Untergestells weisen eine hohe Festigkeit und Belastbarkeit auf. In den Fachwerkprofilen wirken im Wesentlichen Zugkräfte und Druckkräfte, weshalb bereits bei relativ kleinen Profilquerschnitten und geringem Gewicht des Rahmentragwerks hohe Lasten aufgenommen werden können. Die Neigung der Fachwerkprofile gegenüber der Längsachse des Untergestells liegt dabei vorzugsweise im Bereich von 45° bis 60°. Sofern eine Verstärkung des Rahmentragwerks erwünscht ist, können Vertikalstäbe im Bereich der Winkelhalbierenden der Dreiecke eingesetzt werden, was mit geringem Aufwand verbunden ist.

Die äusseren Tragstrukturen sind bezüglich der Längsachse des Untergestells vorzugsweise spiegelsymmetrisch ausgebildet, sodass sie mit reduziertem Aufwand gefertigt werden können.

Die Neigung der Fachwerkprofile gegenüber der Längsachse des Untergestells ist im Endbereich des Rahmentragwerks bzw. des Zentralmoduls vorzugsweise erhöht. Durch Fachwerkprofile in den Endbereichen des Rahmentragwerks wird daher wenigstens ein Dreieck gebildet wird, das einen spitzeren Winkel aufweist als die Dreiecke, die durch die Fachwerkprofile im mittleren Bereich des Rahmentragwerks gebildet werden. Die Dichte der Fachwerkprofile ist in den Endbereichen, in denen vor allem beim Anheben der Fahrzeuge sehr hohe Lasten auftreten, daher vorzugsweise höher als die Dichte der Fachwerkprofile im mittleren Bereich des Rahmentragwerks.

Das zentral in Fachwerktechnik und endseitig vorzugsweise in Kastentechnik aufgebaute Untergestell weist ein reduziertes Eigengewicht auf und wird durch dieses folglich weniger belastet. Bei gleicher Brutto-Belastbarkeit können erfindungsgemässe Untergestelle bzw. erfindungsgemässe Fahrzeuge somit ein wesentlich höheres maximales Ladegewicht aufnehmen bzw. bei gleichem maximalen Ladegewicht resultiert ein entsprechend tieferes Eigengewicht des Fahrzeugs bzw. Untergestells und somit eine wesentliche Reduktion des Materialeinsatzes.

Mit den in Fachwerktechnik aufgebauten äusseren Tragstrukturen kann das Untergestell grössere Stützweiten zwischen Radsätzen oder Drehgestellen überbrücken und grössere Lasten aufnehmen. Dabei können die maximalen Ladegewichte bzw. die maximalen Bruttoladegerichte bestehender Fahrzeuge erreicht oder auch überschritten werden. Mit einfachen Massnahmen ist die Belastbarkeit der erfindungsgemässen Untergestelle bedarfsweise skalierbar.

Das Rahmentragwerk umfasst eine Vielzahl identischer und vorzugsweise standardisierter Vorrichtungsteile, insbesondere Fachwerkprofile, die einfach gefertigt oder kostengünstig beschafft werden können. Die Dimensionierung des Rahmentragwerks gemäss vorgegebenen Spezifikationen kann dabei in einfacher Weise durch Verwendung von standardisierten Profilteilen in entsprechender Länge realisiert werden. Die Planung oder Entwicklung von Untergestellen nach vorgegebenen Spezifikationen kann somit mit geringem Aufwand und reduzierten Kosten erfolgen.

In vorzugsweisen Ausgestaltungen ist das Rahmentragwerk als Zentralmodul realisiert, dass in Fahrtrichtung frontseitig und rückseitig mit einem Kopfmodul fest oder lösbar verbunden ist, welches mit einem einachsigen oder mehrachsigen Laufwerk oder Drehgestell verbunden ist.

Aufgrund der Trennung des Untergestells in Module resultieren wesentliche Vorteile bei der Fertigung. Zentralmodule und Kopfmodule können in getrennten Produktionsstrassen und in kleineren Produktionshallen gefertigt werden. Die Betriebsmittel an den Fertigungsstandorten, z.B. Schweissroboter, können insbesondere aufgrund der Modularität des Untergestells optimal genutzt werden.

Zentralmodule mit Fachwerkstrukturen weisen im Wesentlichen Schraubverbindungen und/oder Nietverbindungen auf, während Kopfmodule mit Kastenstrukturen überwiegend Schweissverbindungen aufweisen. Die betreffenden Module können vorteilhaft separat in entsprechend angepassten Arbeitsumgebungen gefertigt werden. Für Kopfmodule kann eine Fertigungsstrasse mit Schweissrobotern bereitgestellt werden, die für das Zentralmodul nicht benötigt werden. Prozesse in der Fertigungsstrasse mit Schweissrobotern werden daher nicht durch Arbeitsprozesse am Zentralmodul verzögert. Aufgrund relativ geringer Abmessungen der Module im Vergleich zu den Abmessungen des gesamten Untergestells können die Kopfmodule und Zentralmodule in kleineren Fertigungshallen gefertigt werden.

Ferner können standardisierte Kopfmodule mit Zentralmodulen unterschiedlicher Spezifikation in Bezug auf Traglast, Länge und Funktion kombiniert werden, was einerseits Skaleneffekte in Bezug auf die Kopfmodule und andererseits Flexibilität in Bezug auf das Zentralmodul und damit den gesamten Tragwagen ermöglicht.

Vorzugsweise werden das Zentralmodul und die Kopfmodule durch Schraubverbindungen miteinander verbunden. Kopfmodule können für beliebig dimensionierte Zentralmodule bereitgestellt und bei Bedarf durch Verschraubung innerhalb kürzester Zeit montiert werden. Für den Fall von Wartungsarbeiten oder Instandstellungsarbeiten können Kopfmodule vom Zentralmodul gelöst und gewartet oder ausgetauscht werden. Dabei ist es möglich, ein Kopfmodul mit dem zugehörigen Laufwerk oder Drehgestell vom Untergestell zu lösen und in die Reparaturwerkstätte zu verfahren. Aufwändige Vorrichtungen zum Lösen des Drehgestells sind daher nicht notwendig. Die Vorrichtungen zur Verbindung des Zentralmoduls und der Kopfmodule werden vorzugsweise standardisiert ausgeführt, sodass beliebige Zentralmodule und Kopfmodule stets auf dieselbe Weise miteinander verbunden werden können.

Da die äusseren Tragstrukturen des Zentralmoduls vorzugsweise als Gleichteile ausgeführt sind, kann auch hier, insbesondere im Hinblick auf Montage- und Hilfseinrichtungen, ein Skaleneffekt erzielt werden. Die beiden äusseren Tragstrukturen des Zentralmoduls können durch beliebige Verbindungsvorrichtungen, wie Transversalstreben und dergleichen miteinander verbunden werden.

Vorzugsweise wird eine Verbindungsstruktur mit gegeneinander geneigten und vorzugsweise spiegelbildlich ausgebildeten ebenen Fachwerkstrukturen eingesetzt. Bei der Verwendung einer solchen Verbindungsstruktur resultiert wiederum eine hohe Festigkeit oder Steifigkeit bei relativ geringem Gewicht.

Die Elemente der Verbindungsstruktur werden vorzugsweise miteinander verschraubt oder vorzugsweise vernietet. Die Transversalstreben bestehen vorzugsweise aus zwei Winkelelementen, die miteinander und den anschliessenden Anschlussplatten vernietet werden. Die Anschlussplatten selbst werden vorzugsweise mit den oberen bzw. unteren Längsträgern vernietet, gegebenenfalls verschraubt oder verschweisst.

Zu beachten ist wiederum, dass auch das Zentralmodul selbst vorzugsweise modular aufgebaut ist. Die äusseren Tragstrukturen können identisch ausgebildet sein und somit einzeln gefertigt werden. In der Folge können zwei äussere Tragstrukturen durch eine geeignete Verbindungsstruktur miteinander verbunden werden. Auf Schweissverbindungen kann verzichtet werden. Stattdessen werden vorzugsweise Verbindungen durch Vernieten oder Verschrauben realisiert. Aufgrund der vorteilhaften Kraftverläufe in den Vorrichtungsteilen können an den Knotenpunkten und/oder an den Verbindungspunkten der äusseren Tragstrukturen und der Verbindungsstruktur die Vermittlungsmittel auf ein Minimum reduziert werden. Die notwendigen Verbindungsschrauben und/oder Nieten werden vorzugsweise entlang einer geometrischen Linie, z.B. einer Gerade oder einem Kreis, vorzugsweise gleichmässig verteilt angeordnet.

Die äusseren Tragstrukturen sind vorzugsweise derart ausgestaltet, dass die Oberseite des Untergestells eine ebene Fläche bildet, parallel zu der die oberen Längsträger verlaufen. Die unteren Längsträger verlaufen in einem mittleren Bereich des Rahmentragwerks bzw. des Zentralmoduls parallel zu den oberen Längsträgern und davon beabstandet und in den Endbereichen des Zentralmoduls mit vorzugsweise gegeneinander geneigten unteren Längsträgersegmenten gegen die oberen Längsträger.

Die Tragfähigkeit der äusseren Tragstrukturen wird in vorzugsweisen Ausgestaltungen erhöht, indem diese wenigstens zwei ebene Fachwerkstrukturen aufweisen, die voneinander beabstandet und parallel zueinander ausgerichtet sind. Die beiden ebenen Fachwerkstrukturen sind vorzugsweise durch Verbindungsteile miteinander verbunden, die integrale Bestandteile der Fachwerkprofile der beiden ebenen Fachwerkstrukturen sind.

In einer besonders bevorzugten Ausgestaltung weisen die oberen und unteren Längsträger je ein U-Profil mit ersten und zweiten Seitenstücken auf, die durch ein Mittelstück miteinander verbunden sind. Die U-Profil-Form verleiht den oberen und unteren Längsträgern nicht nur eine erhöhte Steifigkeit, sondern erlaubt auch die einfache Montage der Fachwerkprofile zur Realisierung der beiden ebenen Fachwerkstrukturen. Die Seitenstücke bilden Flansche, an denen die Fachwerkprofile direkt oder bevorzugt über Knotenbleche befestigt werden können.

Auch die Fachwerkprofile weisen vorzugsweise ein U-Profil mit ersten und zweiten Seitenstücken auf, die durch ein Mittelstück miteinander verbunden sind. Die ersten Seitenstücke der Fachwerkprofile können daher vorteilhaft in einer ersten Fachwerkebene endseitig an Knotenpunkten mit den korrespondierenden ersten Seitenstücken des zugewandten oberen oder unteren Längsträgers verbunden werden. Die zweiten Seitenstücke der Fachwerkprofile werden in einer zweiten Fachwerkebene endseitig an Knotenpunkten mit den korrespondierenden zweiten Seitenstücken des zugewandten oberen oder unteren Längsträgers verbunden. Die Seitenstücke der vorzugsweise ausgestalteten Fachwerkprofile sind daher in die ebenen Fachwerkstrukturen integriert und halten diese mit den Mittelstücken in einem festen gegenseitigen Abstand. Die Mittelstücke der Fachwerkprofile verleihen den ebenen Fachwerkstrukturen eine hohe Stabilität, sodass diese auch bei Einwirkungen quer zur Achse der Schwerkraft stabil ausgerichtet bleiben. Die resultierende Struktur kann auch als räumliches Fachwerk betrachtet werden.

Die Kraftverläufe innerhalb Vorrichtungsteile des Untergestells verlaufen daher besonders vorteilhaft. Die Vorrichtungsteile des Zentralmoduls und der Kopfmodule sind hinsichtlich der Kräfte, einerseits von der Nutzlast und andererseits von benachbarten Fahrzeugen auf ein erfindungsgemässes Fahrzeug bzw. Untergestell ausgeübt werden, im Wesentlichen stets auf Zug oder Druck belastet, sodass auch nach langer Betriebsdauer der Fahrzeuge keine störenden Verformungen auftreten.

Die Seitenstücke der U-Profile der Fachwerkprofile und der Längsträger dienen als Flanschelemente, die miteinander oder mit Knotenblechen bzw. Knotenplatten vorteilhaft vernietet und verschraubt werden können. Auf Schweissarbeiten bei der Fertigung der Raumstruktur oder des Zentralmoduls kann weitgehend oder vollständig verzichtet werden. Durch Verzicht auf thermisches Fügen, wird auch ein Verziehen der Raumstruktur vermieden.

Zur Gewichtsreduktion können die U-Profil-förmigen Fachwerkprofile mit Lochungen versehen sein. Da Doppel-T-Profile einseitig auch ein U-Profil aufweisen, sind diese grundsätzlich auch einsetzbar.

Die oberen Längsträger und/oder die unteren Längsträger sind vorzugsweise mit einem Verstärkungsband versehen, das innerhalb des betreffenden U-Profils gehalten ist. Das Verstärkungsband wird verwendet, um die Durchbiegung der Rahmenstruktur im mittleren Bereich zu reduzieren, damit normative Vorgaben eingehalten werden können.

Darüber hinaus ermöglicht die Verstärkung insbesondere des oberen Längsträgers mittels des Verstärkungsbands die Lastadaption des oberen Längsträgers und somit der Rahmenstruktur auf unterschiedliche Lastanforderungen. Das Verstärkungsband kann einteilig oder mehrteilig ausgeführt sein und grossflächig über das gesamte Zentralmodul oder bei Zonen erhöhter Belastung lokal vorgesehen sein. Das Verstärkungsband kann aus Metall oder CFK/GFK-Materialien bzw. Kohlefaser-verstärkten und Glasfaser-verstärkten Kunststoffen bestehen, welche bei hervorragenden mechanischen Eigenschaften nur ein geringes Gewicht aufweisen.

Die Eigenschaften des oberen Längsträgers und somit der Rahmenstruktur sind demnach durch Einsatz des einfach ausgebildeten Verstärkungsbandes in einfacher Weise skalierbar. Die oberen und unteren Längsträger können bei entsprechender Auslegung und Dimensionierung stets mit denselben Abmessungen verwendet und bedarfsweise durch das Verstärkungsband verstärkt werden. Insbesondere können die oberen und unteren Längsträger identisch ausgebildet sein und von demselben Rohling geschnitten werden.

Die Verbindungsstruktur umfasst vorzugsweise mehrere seriell aneinander anschliessende Strukturgruppen, die je vier Diagonalstreben aufweisen, von denen je zwei der einen und je zwei der anderen äusseren Tragstruktur zugeordnet sind.

Die vier Diagonalstreben sind mit einem ersten Anschlussflansch miteinander sowie mit einer einteiligen oder mehrteiligen Transversalstrebe verbunden, die den oberen oder unteren Längsträger miteinander verbindet. Mit einem zweiten Anschlussflansch sind die Diagonalstreben mit dem zugeordneten unteren oder oberen Längsträger verbunden, so dass jeweils zwei Diagonalstreben zusammen mit dem zugeordneten Längsträger und gegebenenfalls unter Einschluss der Transversalstrebe ein Dreieck bilden. Die Diagonalstreben bilden eine Pyramide, die mit einer Längsseite der ersten äusseren Tragstruktur und mit der gegenüberliegenden Längsseite der zweiten äusseren Tragstruktur zugewandt ist. Mit dem Pyramidenfuss sind die Diagonalstreben mit den einander gegenüberliegenden unteren Längsträgern oder mit den einander gegenüberliegenden oberen Längsträgern verbunden. Mit der Pyramidenspitze sind die Diagonalstreben etwa in der Mitte mit der Transversalstrebe verbunden, welche entsprechend die einander gegenüberliegenden oberen Längsträger oder die einander gegenüberliegenden unteren Längsträger miteinander verbindet. Die Pyramide kann daher in Normalstellung oder auf dem Kopf stehend in die Rahmenstruktur eingebaut werden.

Die Verbindungsstruktur mit den Pyramidenstrukturen bildet aneinander anschliessende Dreiecke einer Fachwerkstruktur. Dabei resultieren zwei gegeneinander geneigte ebene Fachwerke oder eine räumliche Fachwerkstruktur, die beidseitig gegeneinander geneigte ebene Fachwerke aufweist, d.h. Fachwerke, in denen alle relevanten Fachwerkteile in einer Ebene liegen.

Die Fachwerkstrukturen der äusseren Tragstrukturen und der Verbindungsstruktur sind vorzugsweise deckungsgleich angeordnet, d.h. die zueinander korrespondierenden Fachwerkprofile der einzelnen Fachwerkstrukturen liegen jeweils in einer Ebene und auf derselben Höhe entlang der Längsachse des Untergestells. Die Fachwerkstrukturen sind somit aufeinander abgestimmt und verstärken sich gegenseitig. Zueinander korrespondierende Teile sind vorzugsweise identisch ausgebildet.

Die Transversalstreben der Verbindungsstruktur sind beidseitig durch Anschlussplatten mit den zugeordneten oberen oder unteren Längsträgern verbunden, vorzugsweise vernietet. Die Anschlussplatten sind daher optimal durch die Rahmenstruktur, d.h. durch die zugeordneten äusseren Tragstruktur und die Verbindungsstruktur abgestützt und weisen eine hohe Belastbarkeit auf. In vorzugsweisen Ausgestaltungen sind daher zumindest einige der Anschlussplatten mit wenigstens einem Tragzapfen versehen, der fest oder drehbar angeordnet ist. Aufgrund der stabilen Befestigung können die Tragzapfen daher hohen Belastungen ausgesetzt werden.

Die Verbindung der Fachwerkprofile, der Diagonalstreben und der Transversalstreben sowie der unteren und oberen Längsträger miteinander erfolgt vorzugsweise durch obere oder untere Knotenplatten oder Knotenbleche, die mit den Längsträgern und Fachwerkprofilen vorzugsweise verschraubt und/oder vernietet sind. Die Knotenbleche können dabei auf wenige Typen begrenzt werden, sodass auch diesbezüglich ein standardisierter Aufbau resultiert.

Die Fachwerkprofile und die oberen und unteren Längsträger und gegebenenfalls die Diagonalstreben sind an den Knotenpunkten mit oberen und unteren Knotenplatten oder Knotenbleche verschweisst oder verschraubt.

Die Kopfmodule weisen vorzugsweise eine Kastenstruktur mit mehreren Kastensegmenten auf, die vorzugsweise durch Kastenplatten verstärkt sind, die innerhalb der Kastenstruktur typischerweise parallel zur Längsachse des Untergestells ausgerichtet formschlüssig gehalten oder eingeschweisst sind.

Weiterhin weisen die Kopfmodule vorzugsweise eine einteilige oder mehrteilige obere Trägerplatte, die an den oberen Längsträger anschliesst, und eine einteilige oder mehrteilige untere Trägerplatte auf, die an den unteren Längsträger anschliesst. Die Kraftübertragung über das Untergestell kann daher vorteilhaft einerseits über die obere Trägerplatten und die oberen Längsträger und andererseits über die unteren Trägerplatten und die unteren Längsträger erfolgen.

Die Trägerplatten bestehen vorzugsweise aus verschiedenen miteinander verschweissten Platten, die entsprechend ihrer Belastung unterschiedliche Dicken aufweisen können.

Bei einem Schienenfahrzeug kann auf diese Weise die Kraftübertragung vorteilhaft auf die Funktionselemente des Kopfmoduls, z.B. die Puffer und die Wagenkupplung, übertragen werden. Während die äusseren Tragstrukturen des Zentralmoduls vorteilhaft Kräfte der transportierten Last aufnehmen können, übernehmen insbesondere die unteren und oberen Trägerplatten des Kopfmoduls in Verbindung mit den Längsträgern des Zentralmoduls Kräfte die parallel zur Längsachse auf das Untergestell, z.B. bei der Beschleunigung oder dem Anhalten des Fahrzeugs, einwirken.

Die Trägerplatten des Kopfmoduls bilden gleichzeitig die untere und obere Abdeckung der vorzugsweise realisierten Kastenstruktur des Kopfmoduls, mit Kastenwänden, die einzelnen Kasten voneinander trennen. Die Kastenstruktur verleiht dem Kopfmodul eine hohe Steifigkeit, sodass hohe axiale Kräfte aufgenommen werden können. Gleichzeitig weist die Kastenstruktur nur ein geringes Gewicht auf, sodass das Untergestell mit dem Zentralmodul und den Kopfmodulen, welche einen Wagenkasten bilden, nur ein geringes Eigengewicht aufweist.

Nachfolgend wird die Erfindung anhand von Zeichnungen näher erläutert. Dabei zeigt:
- Fig. 1: ein erfindungsgemässes Untergestell 1, welches modular aufgebaut ist und zwei Kopfmodule 3 aufweist, die durch ein Zentralmodul 2 miteinander verbunden sind, das zwei in Fachwerktechnik aufgebaute äussere Tragstrukturen 2A, 2B aufweist, die durch eine Verbindungsstruktur 2C miteinander verbunden sind und die je einen oberen und einen unteren Längsträger 21, 22 aufweisen, welche durch Fachwerkprofile 24, 25 und gegebenenfalls Knotenplatten 281, 282, 283 miteinander verbunden sind;
- Fig. 2: ein Fahrzeug bzw. Schienenfahrzeug 10 mit dem entlang Linie A--A von Fig. 1 geschnittenen Untergestell 1, das auf ein Drehgestell 100 aufgesetzt ist bzw. wird sowie eine Detailansicht des vorderen Endstücks E2 des Zentralmoduls 2;
- Fig. 3a: das Zentralmodul 2 des Untergestells 1 von Fig. 1;
- Fig. 3b: das Zentralmodul 2 von Fig. 3a nach teilweiser Demontage mit den im vorderen Endbereich freigelegten oberen und unteren Längsträgern 21, 22, die gegeneinander geöffnete U-Profile aufweisen, sowie einer Detaildarstellung eines Teils des unteren Längsträgers 22;

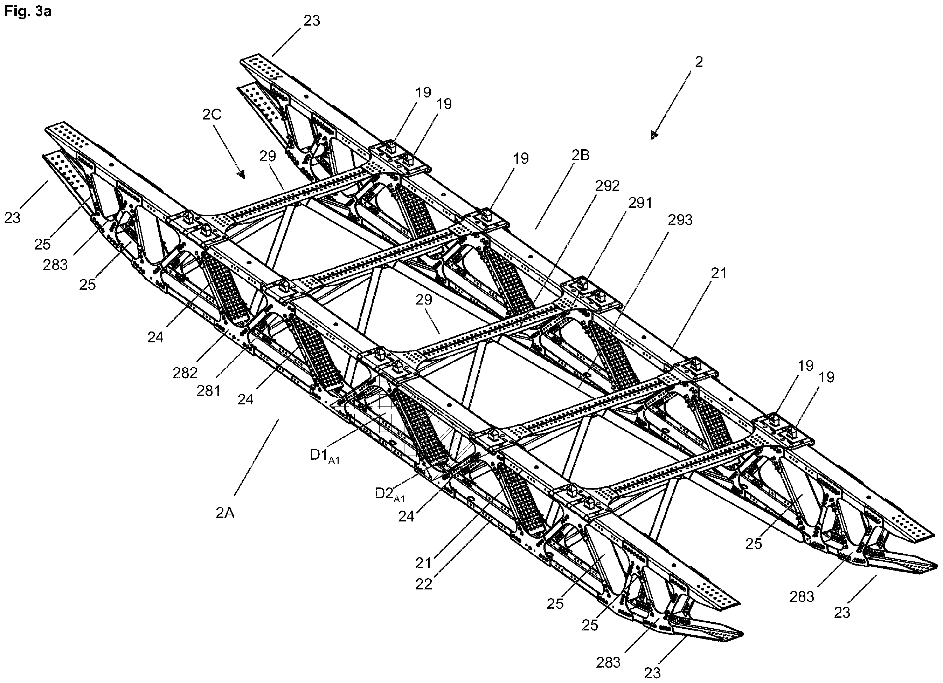

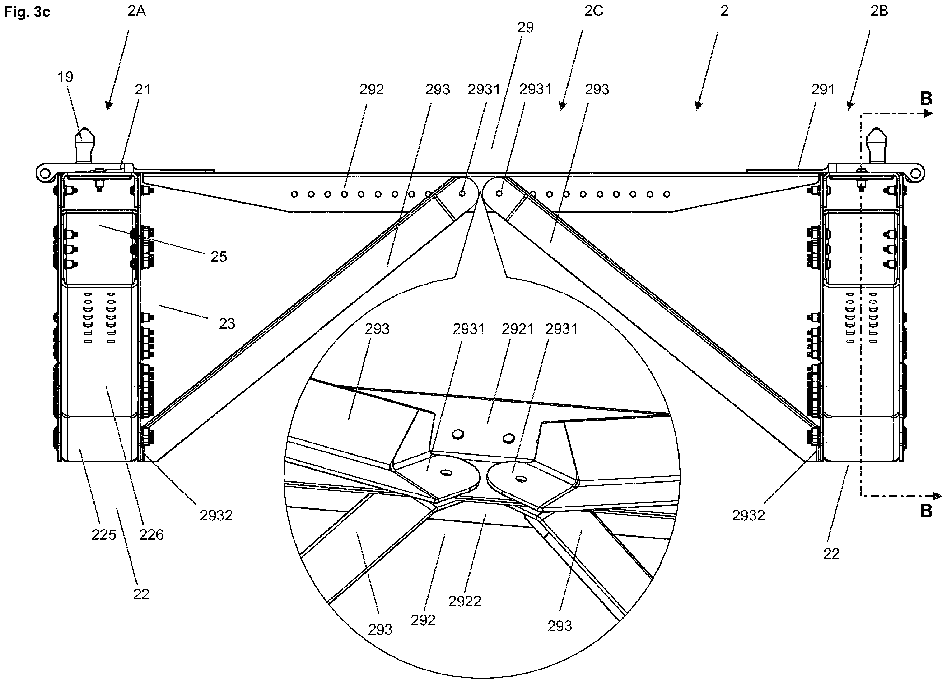

- Fig. 3c: eine Frontansicht des Zentralmoduls 2 von Fig. 3a mit den beiden äusseren Tragstrukturen 2A, 2B und Blick auf eine Strukturgruppe 29 der Verbindungsstruktur 2C, die zweiteilige Transversalstreben 292, die beidseits durch Anschlussplatten 291 mit den äusseren Tragstrukturen 2A, 2B verbunden ist, und die vier pyramidal ausgerichtete Diagonalstreben 293 umfasst, die, wie eine Detaildarstellung zeigt, mit den oberen Endstücken 2931 mit der Transversalstrebe 292 und den unteren Endstücken 2932 mit den unteren Längsträgern 22 der zugeordneten äusseren Tragstruktur 2A bzw. 2B verbunden sind;
- Fig. 3d: eine der praktisch identischen äusseren Tragstrukturen 2A, 2B des Zentralmoduls 2, nämlich die äussere Tragstruktur 2B von Fig. 3c, die entlang der Linie B--B in zwei Teile geschnitten ist, die je eine ebene Fachwerkstruktur 2A1 bzw. 2A2; 2B1, 2B2 mit Fachwerkprofilen 21, 22, 24, 25 aufweisen, die paarweise mit dem oberen Längsträger 21 bzw. dem unteren Längsträger 22 Dreiecke D1_{A1}, D2_{A2}; D1_{A2}, D2_{A2} einschliessen, wie die Detaildarstellung exemplarisch zeigt;
- Fig. 3e: einen Teil des Zentralmoduls 2 von Fig. 3a mit einer Strukturgruppe 29 der Verbindungsstruktur 2C in Explosionsdarstellung und mit Fachwerkprofilen 24 der beiden äusseren Tragstrukturen 2A, 2B, die mit den unteren Längsträgern 22 je zu einem Dreieck zusammengeschlossen sind;
- Fig. 4a: das rechte Endstück des Zentralmoduls 2 von Fig. 1 mit dem damit verbundenen Kopfmodul 3 von oben;
- Fig. 4b: das rechte Endstück des Zentralmoduls 2 von Fig. 1 mit dem damit verbundenen Kopfmodul 3 von unten;
- Fig. 5a: in räumlicher Darstellung von oben, das Kopfmodul 3 von Fig. 4a, das eine Kastenstruktur 30 und eine mehrteilige obere Trägerplatte 31, die an den oberen Längsträger 21 anschliesst, und eine mehrteilige untere Trägerplatte 32, die an den unteren Längsträger 22 anschliesst, aufweist;
- Fig. 5b: das Kopfmodul 3 von Fig. 5a in räumliche Darstellung von unten; und
- Fig. 5c: das Kopfmodul 3 von Fig. 5a von oben.

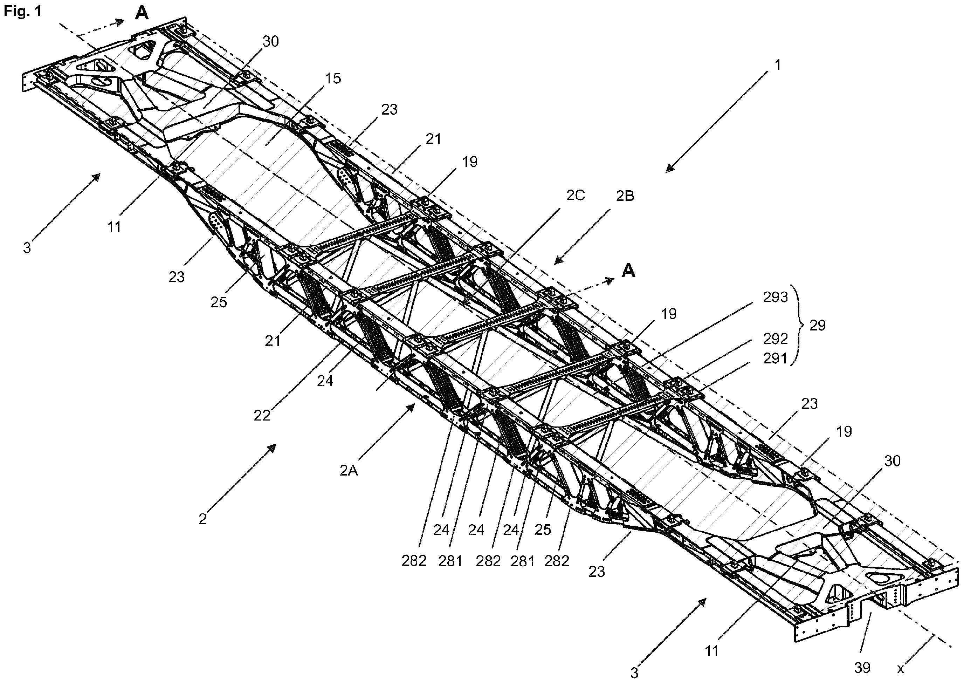

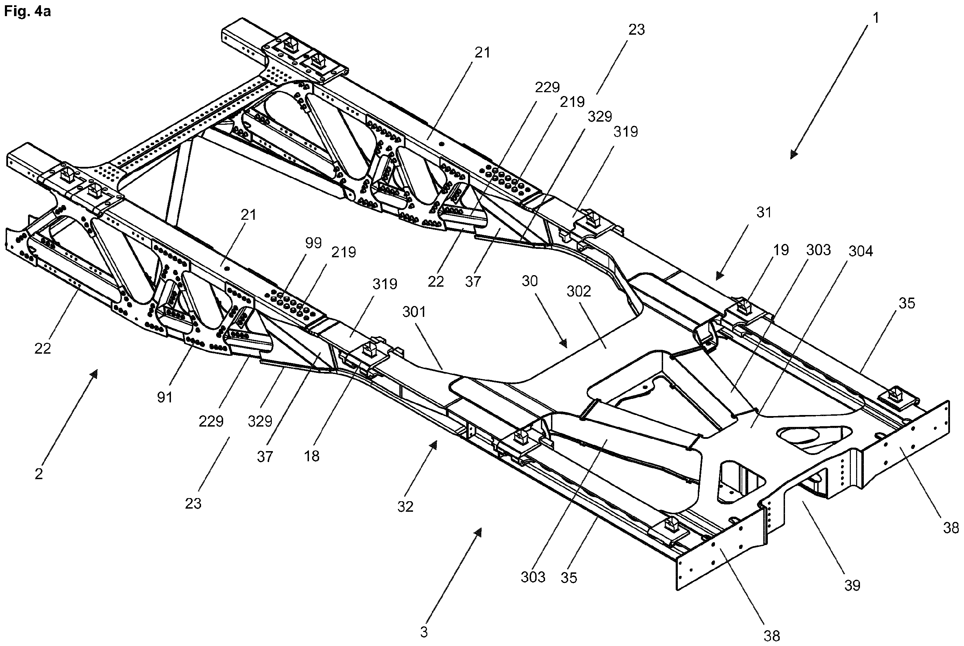

Fig. 1 zeigt ein erfindungsgemässes Untergestell 1, das modular aufgebaut ist und zwei Kopfmodule 3 aufweist, die durch ein Zentralmodul 2 miteinander verbunden sind. In Anschlussbereichen 23 sind die Endstücke des Zentralmoduls 2 durch Schraubensätze 99 (siehe Fig. 4a) mit den Kopfmodulen 3 verschraubt. Zentralmodule 2 und Kopfmodule 3 können daher separat gefertigt und gemäss Anforderungen ausgewählt und miteinander verbunden werden.

Das Zentralmodul 2 ist in dieser Ausgestaltung vollständig in Fachwerktechnik aufgebaut und umfasst zwei äussere Tragstrukturen 2A, 2B in Fachwerktechnik, die durch eine Verbindungsstruktur 2C in Fachwerktechnik miteinander verbunden sind. Durch diese Konstruktion resultiert eine hochstabile Rahmenstruktur mit minimalem Gewicht. Die äusseren Tragstrukturen 2A, 2B können je für sich als räumliche Fachwerkstruktur betrachtet werden, die zwei voneinander beanstandete und miteinander verbundene ebene Fachwerke umfasst. Ferner bilden die äusseren Tragstrukturen 2A, 2B in Fachwerktechnik mit der Verbindungsstruktur 2C in Fachwerktechnik eine erweiterte räumliche Fachwerkstruktur.

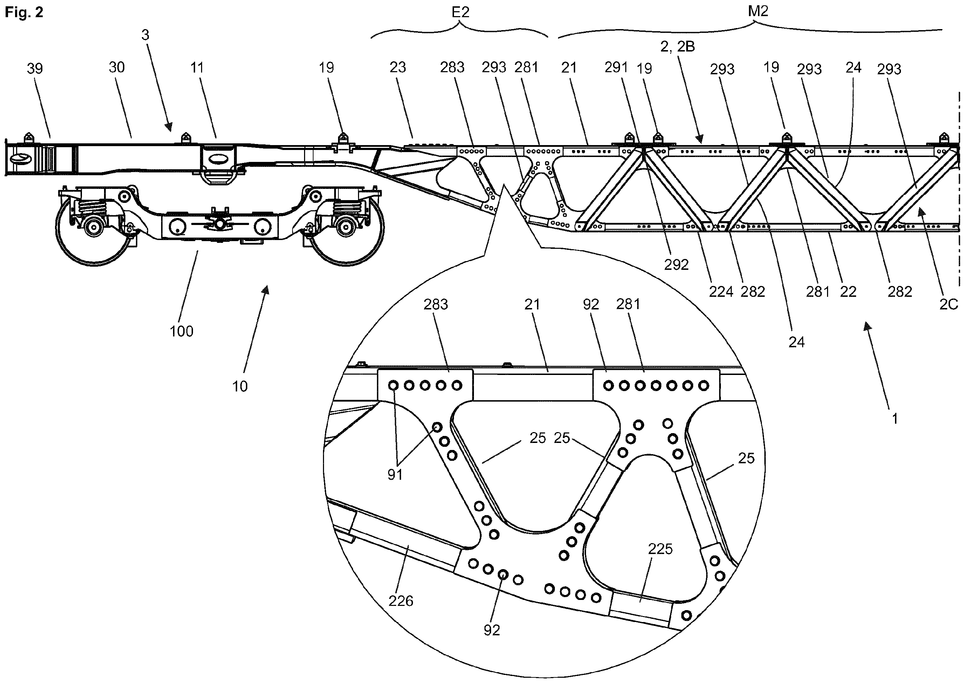

Die äusseren Tragstrukturen 2A, 2B umfassen gegeneinander geöffnete U-Profil-förmige obere Längsträger 21 und U-Profil-förmige untere Längsträger 22, die an Knotenpunkten durch U-Profil-förmige Fachwerkprofile 24, 25 miteinander verbunden sind. An den Knotenpunkten sind obere Knotenbleche 281, welche die Fachwerkprofile 24, 25 mit dem oberen Längsträger 21 verbinden, und untere Knotenbleche 282 vorgesehen, welche die Fachwerkprofile 24, 25 mit dem unteren Längsträger 22 verbinden. Endseitig sind Knotenbleche 283 vorgesehen, welche die zugeordneten oberen und unteren Längsträger 21, 22 zusätzlich miteinander verbinden (siehe Fig. 2).

Der obere Längsträger 21 verläuft entlang einer Gerade, während der untere Längsträger 22 in einem mittleren Bereich parallel zum oberen Längsträger 21 und beidseitig in den Endbereichen entlang einem Bogen gegen den oberen Längsträger 21 verläuft.

Im mittleren Bereich des Zentralmoduls 2 sind gelochte erste Fachwerkprofile 24 vorgesehen, die abwechslungweise um etwa +/- 45° gegenüber der Längsachse des Untergestells 1 geneigt sind und seriell miteinander verbunden eine Sägezahnstruktur bilden. Die ersten Fachwerkprofile 24 bilden mit den gerade verlaufenden oberen und unteren Längsträgern 21, 22 gleichschenklige, rechtwinklige Dreiecke.

In den Endbereichen des Zentralmoduls 2 sind nicht-gelochte zweite Fachwerkprofile 25 vorgesehen, die abwechslungweise um etwa +/- 60° gegenüber der Längsachse des Untergestells 1 geneigt sind und seriell miteinander verbunden eine Sägezahnstruktur bilden. Zusammen mit dem gerade verlaufenden oberen Längsträger 21 und dem in diesem Bereich gebogen verlaufenden unteren Längsträger 22 bilden die zweiten Fachwerkprofile 25 nicht-gleichschenklige, spitzwinklige Dreiecke.

Im Mittelbereich des Zentralmoduls 2, in dem die oberen und unteren Längsträger 21, 22 parallel zueinander verlaufen, ist die Verbindungsstruktur 2C eingesetzt, welche die beiden äusseren Tragstrukturen 2A, 2B miteinander verbindet und fünf identische Strukturgruppen 29 aufweist. Jede Strukturgruppe 29 umfasst eine zweiteilige Transversalstrebe 292, die beidseits durch Anschlussplatten 291 mit den oberen Längsträgern 21 verbunden sind, sowie vier pyramidal ausgerichtete Diagonalstreben 293, die an den oberen Enden bzw. an der Pyramidenspitze mit der Transversalstrebe 282 und an den unteren Enden paarweise mit den zugeordneten unteren Längsträgern 22 verbunden sind.

Die mit den oberen Längsträgern 21 verbundenen Anschlussplatten 291 der Transversalstreben 292 sind ferner mit einem oder zwei Tragzapfen 19 versehen. Die Tragzapfen 19 dienen dem Halten von Oberbauten, Containern, Wechselaufbauten oder einfachen Bodenplatten 15 von denen eine schematisch gezeigt ist. Die Tragzapfen 19 sind vorzugsweise schwenkbar angeordnet, sodass diese entsprechend den zu montierenden Oberbauten eingeschwenkt oder ausgeschwenkt werden können.

Auf der Unterseite sind die Kopfmodule 3 je mit einer Kopplungsvorrichtung 11 versehen, an der ein Laufwerk oder ein Drehgestell angekoppelt werden kann. Frontseitig weisen die Kopfmodule 3 eine Ausnehmung 39 auf, in der eine Wagenkupplung montierbar ist.

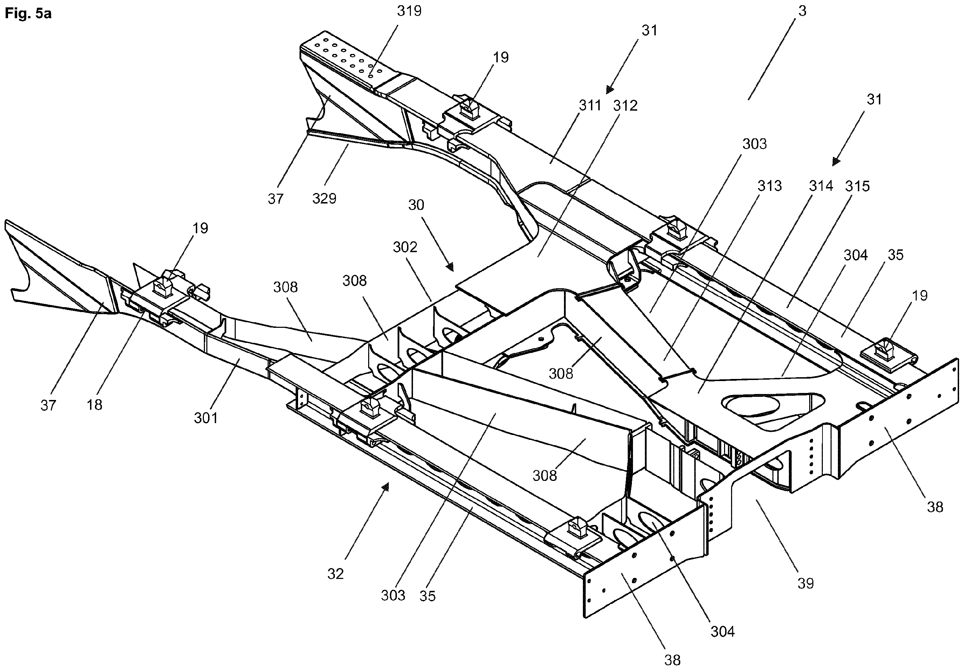

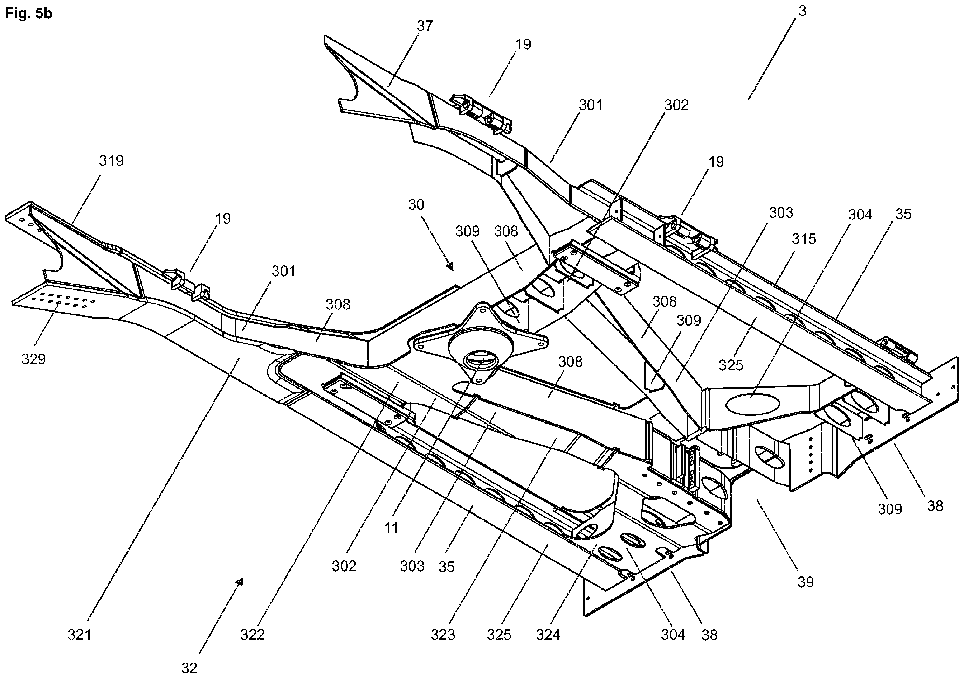

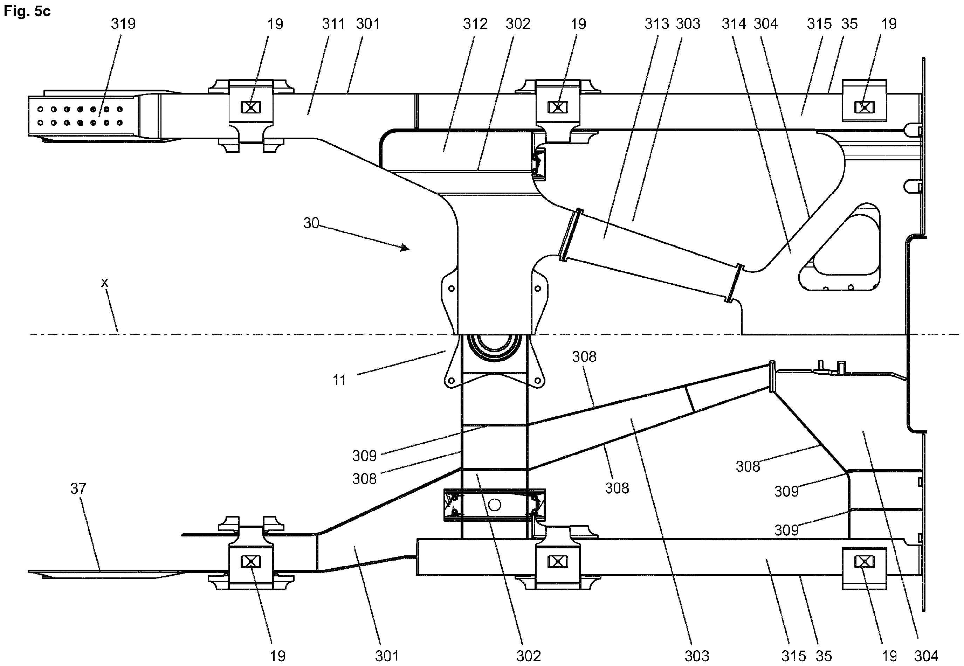

Das beschriebene Zentralmodul 2 weist ein geringes Eigengewicht auf und kann bereits deshalb erhöhte Lasten aufnehmen. Bei gleicher maximaler Last resultiert ein reduziertes Eigengewicht und somit ein reduziertes Bruttogewicht des Untergestells 1 und des Fahrzeugs 10. Dadurch ergibt sich insgesamt eine Reduktion des Materialbedarfs und eine Reduktion der bewegten Masse, was weitere betriebstechnische Vorteile mit sich bringt, wie eine Reduktion des Energiebedarfs, insbesondere der Spitzenlasten bei Anfahrt eines Zuges, sowie eine reduzierte Belastung der Infrastruktur. Die Kopfmodule 3 weisen vorzugsweise eine Kastenstruktur 30 auf (siehe die Figuren 5a, 5b und 5c), die den Kopfmodulen 3 bei minimalem Gewicht eine maximale Festigkeit verleiht.

Fig. 2 zeigt ein Fahrzeug bzw. Schienenfahrzeug 10 mit dem entlang Linie A--A von Fig. 1 geschnittenen Untergestell 1, das auf ein Drehgestell 100 aufgesetzt ist bzw. wird sowie eine Detailansicht des vorderen Endstücks E2 des Zentralmoduls 2.

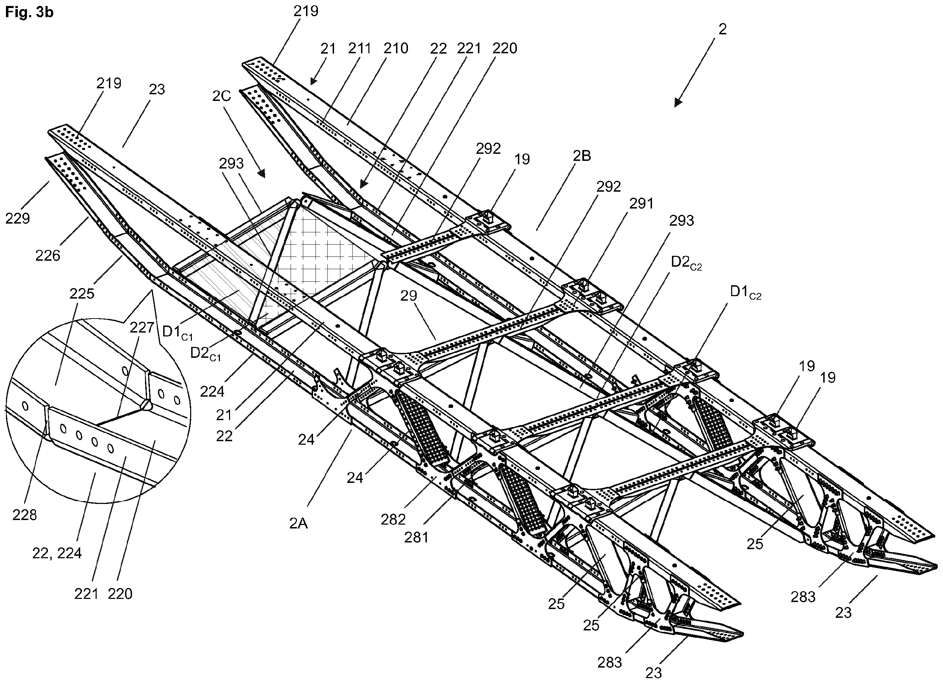

Das Mittelteil M2 des Zentralmoduls 2 erstreckt sich über den Bereich, in dem die oberen und unteren Längsträger 21, 22 parallel zueinander verlaufen. Im Bereich des Endstücks E2 verläuft der untere Längsträger 22 nach oben gegen den oberen Längsträger 21. Der untere Längsträger 22 weist drei Längsträgersegmente 224, 225, 225 auf. Das erste Längsträgersegment 224 verläuft innerhalb des Mittelteils M2 parallel zum oberen Längsträger 21. Die Detaildarstellung zeigt, dass das zweite Längsträgersegment 225 gegenüber dem ersten Längsträgersegment 224 nach oben geneigt und das dritte Längsträgersegment 226 gegenüber dem zweiten Längsträgersegment 225 nach oben geneigt ist, wodurch die Biegung des unteren Längsträgers 22 im Endbereich E2 realisiert wird. Fig. 3b zeigt, dass die Seitenstücke 211 des unteren Längsträgers 21 an den Biegestellen 227 zwischen den Längsträgersegmenten 224, 225 aufgeschnitten sind, sodass die Biegung realisiert werden konnte. Eine Biegung ist auch ohne Einschnitte möglich. Vorzugsweise werden Faltlinien oder Knickstellen vorgesehen, an denen Material nach aussen verdrängt werden kann, um die Biegung auszuführen. An den Faltstellen tritt dabei kaum eine Schwächung des unteren Längsträgers 22 auf. In der Detaildarstellung von Fig. 2 ist gezeigt, dass die durch die Schnittstellen verursachte Schwächung des unteren Längsträgers 21 durch eine vergrösserte Knotenplatte 283 kompensiert wird, welche den unteren Längsträger 22 mit dem oberen Längsträger 21 verbindet.

Fig. 2 zeigt ferner, dass sich die Fachwerkprofile 24, 25 in einer Sicht senkrecht zur Seite des Zentralmoduls 2 überdecken. Die zueinander korrespondierenden Fachwerkprofile 24, 25 liegen daher, in einer entsprechenden Höhe entlang der Längsachse x, in einer Ebene. Auch die Diagonalstreben 293 der Verbindungsstruktur 2C sind deckungsgleich zu den dazu korrespondierenden ersten Fachwerkprofilen 24 des Mittelteils M2 angeordnet. Die Fachwerkstrukturen des Zentralteils 2 sind daher aufeinander abgestimmt und verstärken einander gegenseitig.

Fig. 3a zeigt das Zentralmodul 2 des Untergestells 1 von Fig. 1. Schraffiert ist gezeigt, dass durch zwei benachbarte Fachwerkprofile 24 und den unteren Längsträger 22 jeweils erste Dreiecke D1_{A1} und durch benachbarte Fachwerkprofile 24 und den oberen Längsträger 21 jeweils zweite Dreiecke D2_{A1} der Fachwerkstruktur gebildet werden.

Fig. 3b zeigt das Zentralmodul 2 von Fig. 3a nach teilweiser Demontage. Einige der Fachwerkprofile 24, 25 sowie eine Transversalstrebe 292 wurden beseitigt, um die Sicht auf die oberen und unteren Längsträger 21, 22, die gegeneinander geöffnete U-Profile aufweisen, und die Strukturgruppen 29 der Verbindungsstruktur 2C freizulegen. Eine Transversalstrebe 292 wurde in der Mitte geschnitten. In einer Detaildarstellung ist der untere Längsträger 22 im Anschlussbereich 23 bei einer Biegestelle 227 gezeigt.

Diagonalstreben 293 der Strukturgruppen 29, die mit dem unteren Ende mit dem unteren Längsträger 22 der ersten äusseren Tragstruktur 2A verbunden sind und die mit dem oberen Ende bei der Pyramidenspitze zusammengeschlossen sind, begrenzen erste Dreiecke D1_{c1}. Diagonalstreben 293 der Strukturgruppen 29, die mit den unteren Enden am unteren Längsträger 22 der ersten äusseren Tragstruktur 2A zusammengeschlossen und mit den oberen Enden an Pyramidenspitzen benachbarter Pyramiden gehalten sind, begrenzen zweite Dreiecke D2_{C2} der Verbindungsstruktur 2C. Die Pyramidenspitzen sind nicht direkt durch eine Strebe, sondern durch die zugeordneten Transversalstreben 292 sowie die oberen Längsträger 21 miteinander verbunden. Eine Strebe, welche die Pyramidenspitzen miteinander verbindet und die zweiten Dreiecke D2_{C1} der Verbindungsstruktur 2C schliesst, wird daher virtuell, d. h. wirkungsgleich durch weitere Vorrichtungsteile 292, 21 realisiert. Die der ersten äusseren Tragstruktur 2A zugeordneten Dreiecke D1_{C1}, D2_{C1} der Verbindungsstruktur 2C liegen in einer Ebene bzw. bilden ein erstes ebenes Fachwerk. Mit den Diagonalstreben 293, die der zweiten Tragstruktur 2B zugewandt sind, wird in gleicher Weise ein zweites ebenes Fachwerk mit zugeordneten ersten und zweiten Dreiecken D1_{C2}, D2_{C2} gebildet. Die ersten und zweiten ebenen Fachwerke der Verbindungsstruktur 2C sind gegeneinander geneigt und schliessen in dieser beispielsweisen Ausgestaltung einen Winkel von 90° ein (siehe Fig. 3c).

Fig. 3b zeigt ferner, dass die Endstücke 219, 229 der oberen und unteren Längsträger 21, 22 mit Montagebohrungen versehen sind und dadurch mit Anschlussplatten 319, 329 der Kopfmodule 3 verschraubt werden können (siehe Fig. 5a).

Fig. 3c zeigt eine Frontansicht des Zentralmoduls 2 von Fig. 3a mit den beiden äusseren Tragstrukturen 2A, 2B und Blick auf eine der Strukturgruppe 29 der Verbindungsstruktur 2C, die eine zweiteilige Transversalstrebe 292 aufweist, die beidseits durch Anschlussplatten 291 mit den äusseren Tragstrukturen 2A, 2B verbunden ist und die vier pyramidal ausgerichtete Diagonalstreben 293 aufweist, die, wie die Detaildarstellung zeigt, mit den oberen Endstücken 2931 mit der Transversalstrebe 292 und den unteren Endstücken 2932 mit den unteren Längsträgern 22 der zugeordneten äusseren Tragstruktur 2A bzw. 2B verbunden sind.

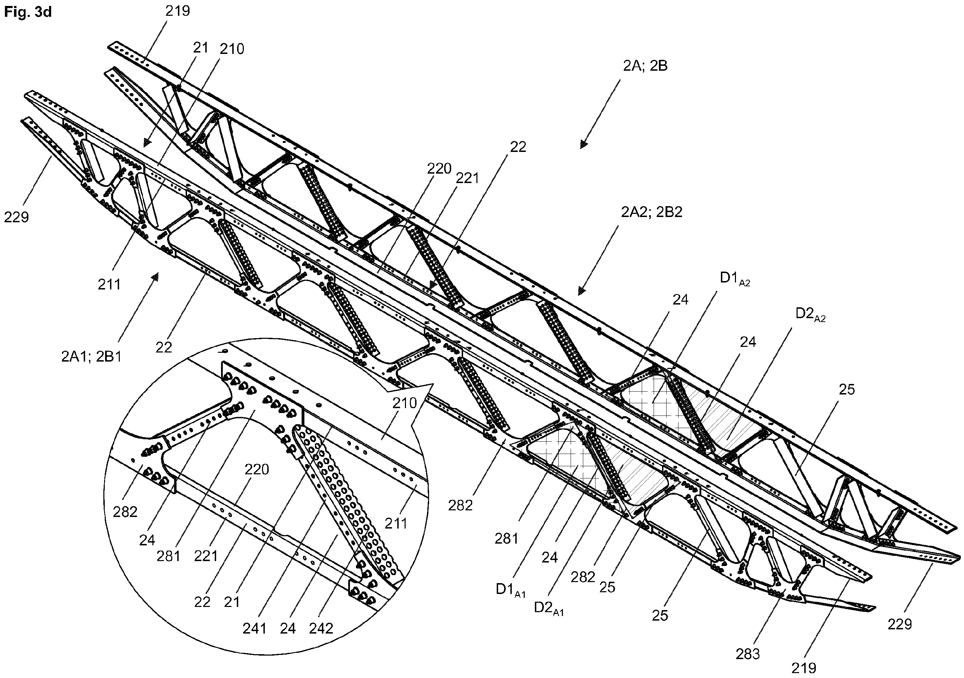

Fig. 3d zeigt eine der beiden praktisch identischen äusseren Tragstrukturen 2A, 2B, nämlich die äussere Tragstruktur 2B von Fig. 3c, die entlang der Linie B--B in zwei Teile geschnitten ist, die je ein ebenes Fachwerk 2A1 bzw. 2A2; 2B1, 2B2 mit Fachwerkprofilen 21, 22, 24, 25 aufweisen, die paarweise mit dem oberen Längsträger 21 bzw. dem unteren Längsträger 22 schraffiert gezeichnete Dreiecke D1_{A1}, D2_{A1}; D1_{A2}, D2_{A2} einschliessen.

Die U-Profil-förmigen oberen und unteren Längsträger 21, 22, die ein Mittelstück 210; 220 und damit verbundene Seitenstücke 211; 221 aufweisen, und die U-Profil-förmigen ersten und zweiten Fachwerkprofile 24, 25, die ein Mittelstück 242 und damit verbundene Seitenstücke 241 aufweisen, sind entlang den Mittelachsen der Mittelstücke 210; 220; 242 in gleich grosse Teile geschnitten. Die Seitenstücke 211; 221; 241 bilden die Fachwerkprofile der beiden ebenen Fachwerke und bilden gleichzeitig die Anschlussflansche zur Verbindung mit den oberen und unteren Knotenplatten 281, 282, mit denen sie vorzugsweise vernietet oder verschraubt sind.

Die Detaildarstellung zeigt zudem, dass die Mittelstücke 242 der ersten Fachwerkprofile 24 gelocht sind, um das Gewicht zu reduzieren.

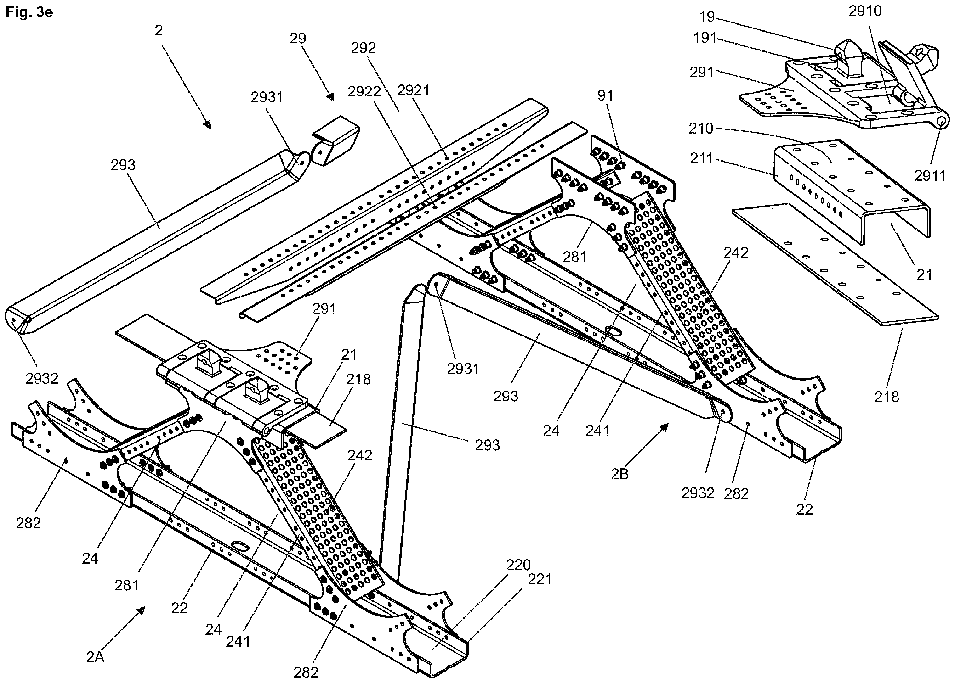

Fig. 3e zeigt einen Teil des Zentralmoduls 2 von Fig. 3a mit einer Strukturgruppe 29 der Verbindungsstruktur 2C in Explosionsdarstellung und Fachwerkprofilen 24, die mit den unteren Längsträgern 22 je zu einem Dreieck zusammengeschlossen sind. Die winkelförmigen Diagonalstreben 293 der Strukturgruppe 29 sind mit unteren Endstücken bzw. Anschlussflanschen 2932 mit den unteren Längsträgern 22 verbunden und mit den oberen Endstücken bzw. Anschlussflanschen 2931 mit der Transversalstrebe 292 verbunden, vorzugsweise vernietet oder verschraubt. Die Transversalstrebe 292 umfasst zwei Transversalelemente 2921, 2922 die identisch ausgebildet und Rücken an Rücken miteinander vernietet und endseitig mit je einer Anschlussplatten 291 verbunden, vorzugsweise vernietet oder verschraubt sind. Durch die winkelförmige Ausgestaltung der Diagonalstreben 293 und der Transversalelemente 2921, 2922 erhält die Strukturgruppe 29 eine erhöhte Steifigkeit.

Auf der rechten Seite ist eine der Anschlussplatten 291 sowie der zugehörige obere Längsträger 21 und ein optional vorgesehenes Verstärkungsband 218 gezeigt, das in das U-Profil des oberen Längsträgers 21 eingelegt wird, um diesen zu verstärken. Die Anschlussplatte 291 weist eine Aufnahmeöffnung 2910 und ein Verbindungsgelenk 2911 auf, welches eine Gelenkplatte 191 mit einem Tragzapfen 19 drehbar hält. Bei Bedarf kann der Tragzapfen 19 ausgeschwenkt oder eingeschwenkt werden.

Fig. 4a zeigt das rechte Endstück des Zentralmoduls 2 von Fig. 1 mit dem damit verbundenen Kopfmodul 3 von oben. Die Endstücke 219, 229 der oberen und unteren Längsträger 21, 22, die Montagebohrungen aufweisen, sind durch Schraubengarnituren 99 mit oberen und unteren Anschlussplatten 319, 329 des Kopfmoduls 3 verbunden. Zwischen den horizontal ausgerichteten oberen Anschlussplatten 319 und den nach unten weisenden unteren Anschlussplatten 329 ist eine Gabelplatte 37 eingesetzt. Über die oberen und unteren Anschlussplatten 319, 329 sind die oberen und unteren Längsträger 21, 22 des Zentralteils 2 mit einer mehrteiligen oberen Trägerplatte 31 und einer mehrteiligen unteren Trägerplatte 32 des Kopfmoduls 3 verbunden. Horizontal auf das Untergestell 1 einwirkende Kräfte werden daher einerseits über die oberen Längsträger 21 und die oberen Trägerplatten 31 und andererseits über die unteren Längsträger 22 und die unteren Trägerplatten 32 übertragen. Frontseitig sind die Kopfmodule 3 mit Frontplatten 38 versehen.

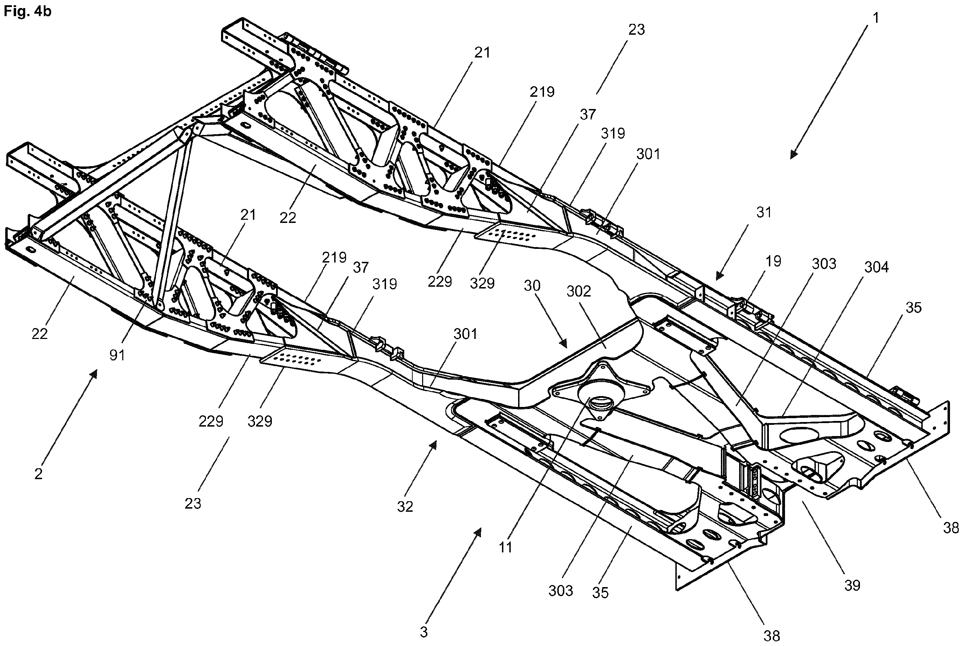

Fig. 4b zeigt das rechte Endstück des Zentralmoduls 2 von Fig. 1 mit dem damit verbundenen Kopfmodul 3 von unten.

Fig. 5a und Fig. 5b zeigen das Kopfmodul 3 von Fig. 4a, das eine Kastenstruktur 30 umfasst, die oben und unten durch die obere Trägerplatte 31 und die untere Trägerplatte 32 abgedeckt ist, von denen je eine Hälfte weggeschnitten ist.

Die oberen Anschlussplatten 319 schliessen an obere Verteilplatten 311 an, die mit einer oberen Transversalplatte 312 verbunden sind, die über obere Diagonalplatten 313 mit oberen Frontplatten 314 verbunden ist. Die oberen Verteilplatten 311 sind zudem mit oberen Linearplatten 315 verbunden, die je Teil eines Doppel-T-Trägers 35 sind. Zusammen bilden die genannten oberen Platten, 319, 311, 312, 313, 314 und 315, die miteinander verschweisst und entsprechend den einwirkenden Lasten dimensioniert sind, die mehrteilige obere Trägerplatte 31.

Die unteren Anschlussplatten 329 schliessen an untere Verteilplatten 321 an, die mit einer unteren Transversalplatte 322 verbunden sind, die über untere Diagonalplatten 323 mit unteren Frontplatten 324 verbunden ist. Die unteren Verteilplatten 321 sind zudem mit unteren Linearplatten 325 verbunden, die je Teil der genannten Doppel-T-Träger 35 sind. Zusammen bilden die genannten unteren Platten 329, 321, 322, 323, 324 und 325, die miteinander verschweisst und entsprechend den einwirkenden Lasten dimensioniert sind, die mehrteilige untere Trägerplatte 32.

Die Doppel-T-Träger 35 sind parallel zur Längsachse x des Untergestells 1 ausgerichtet und übertragen Kräfte von den Puffern (nicht gezeigt) auf das Zentralmodul 2. Durch die Diagonalplatten 323 werden Kräfte von einer frontseitig zentral in einer Ausnehmung 39 angeordneten Wagenkupplung (nicht gezeigt) auf das Zentralmodul 2 übertragen.

Die Kastenstruktur 30, die in Fig. 5a von oben und in Fig. 5b von unten teilweise geöffnet gezeigt ist, umfasst beidseits je einen Verteilkasten 301, die durch die oberen und unteren Verteilplatten 311, 321 abgedeckt sind und die an einen Transversalkasten 302 anschliessen, der durch die obere und die untere Transversalplatte 312, 322 abgedeckt ist und der an zwei Diagonalkasten 303 anschliesst, die durch die oberen und unteren Diagonalplatten 313, 323 abgedeckt sind und die gegeneinander zu je einem Frontkasten 304 verlaufen, die durch die oberen und unteren Frontplatten 314, 324 abgedeckt sind und zwischen denen die Ausnehmung 39 für die Wagenkupplung vorgesehen ist.

Fig. 5c zeigt das Kopfmodul 3 von Fig. 5a von oben. Die einzelnen Kasten 301, 302, 303 und 304 sind seitlich nach aussen und gegeneinander durch Kastenwände 308 begrenzt und zur Stabilisierung mit Kastenplatten 309 versehen, die vorzugsweise gelocht sind. Die Kastenplatten 309 im Transversalkasten 302 und den Frontkasten sind parallel zur Längsachse x des Untergestells 1 ausgerichtet. Die in Leichtbauweise gefertigten Kopfmodule 3 können daher bedarfsweise verstärkt werden, um den vorgegebenen Spezifikationen des Untergestells 1 bzw. des Fahrzeugs 10 zu entsprechen.

### Bezugszeichenliste

- 1: Untergestell
- 10: Fahrzeug, Schienenfahrzeug oder Lastwagen
- 100: Laufwerk, Drehgestell
- 11: Kopplungsvorrichtung
- 15: Fahrzeugboden
- 19: Tragzapfen
- 191: Gelenkplatte
- 2: Zentralmodul
- 2A, 2B: äussere Tragstrukturen
- 2C: Verbindungsstruktur, räumliches Fachwerk
- 21: oberer Längsträger, vorzugsweise mit U-Profil
- 210: Mittelstück des oberen Längsträgers 21
- 211: Seitenstücke des oberen Längsträgers 21
- 218: Verstärkungsband
- 219: Endstücke mit Montagebohrungen
- 22: unter Längsträger, vorzugsweise mit U-Profil
- 220: Mittelstück des unteren Längsträgers 22
- 221: Seitenstücke des unteren Hauptträgers 22
- 224: erstes unteres Längsträgersegment
- 225: zweites unteres Längsträgersegment
- 226: drittes unteres Längsträgersegment
- 227: Biegestellen zwischen Längsträgersegmenten
- 228: Trennschlitz
- 229: Endstücke mit Montagebohrungen
- 23: Anschlussbereiche
- 24: gelochtes Fachwerkprofil, vorzugsweise mit U-Profil
- 241: Seitenstücke des Fachwerkprofils 24
- 242: Mittelstück des Fachwerkprofils 24
- 25: ungelochtes Fachwerkprofil, vorzugsweise mit U-Profil
- 281: obere Knotenplatte
- 282: untere Knotenplatte
- 283: durchgehende Knotenplatte
- 29: Strukturgruppen
- 291: Anschlussplatte
- 2910: Aufnahmeöffnung
- 2911: Verbindungsgelenk
- 292: Transversalstrebe
- 2921: erstes Transversalelement
- 2922: zweites Transversalelement
- 293: Diagonalstreben
- 2931: erster Anschlussflansch
- 2932: zweiter Anschlussflansch
- 3: Kopfmodule
- 30: Kastenstruktur
- 301: Verteilerkasten
- 302: Transversalkasten
- 303: Diagonalkasten
- 304: Frontkasten
- 308: Kastenwände
- 309: Kastenplatten vorzugsweise gelocht,
- 31: obere Trägerplatte
- 311: obere Verteilplatte
- 312: obere Transversalplatte
- 313: obere Diagonalplatte
- 314: obere Frontplatte
- 315: obere Linearplatte
- 319: obere Anschlussplatte
- 32: untere Trägerplatte
- 321: untere Verteilplatte
- 322: untere Transversalplatte
- 323: untere Diagonalplatte
- 324: untere Frontplatte
- 325: untere Linearplatte
- 329: untere Anschlussplatte
- 35: Linearträger
- 37: Gabelplatte
- 38: Frontplatten
- 39: Ausnehmung für die Wagenkupplung
- 91: Verbindungsschrauben
- 99: Anschlussschrauben

## Patentansprüche

1. Untergestell (1) für ein Fahrzeug (10), insbesondere ein Schienenfahrzeug oder einen Lastwagen, mit einem entlang einer Längsachse (x) ausgerichteten Rahmentragwerk, welches zwei äussere Tragstrukturen (2A, 2B) aufweist, die durch eine Verbindungstruktur (2C) miteinander verbunden sind, wobei die äusseren Tragstrukturen (2A, 2B) als räumliche oder ebene Fachwerkstrukturen aufgebaut sind, die seriell miteinander verbundene Fachwerkprofile (24, 25) aufweisen, die einen oberen Längsträger (21) und einen unteren Längsträger (22) derart miteinander verbinden, dass jeweils zwei benachbarte Fachwerkprofile (24, 25) zusammen mit dem oberen oder unteren Längsträger (21; 22) ein Dreieck (D1_{A1}, D2_{A1}; D1_{A2}, D2_{A2}) mit drei Knotenpunkten bilden, **dadurch gekennzeichnet, dass** die Verbindungsstruktur (2C) eine räumliche Fachwerkstruktur ist.

2. Untergestell (1) nach Anspruch 1, **dadurch gekennzeichnet, dass** das Rahmentragwerk ein Zentralmodul (2) ist, welches in Richtung der Längsachse (x) frontseitig und rückseitig je mit einem Kopfmodul (3) fest oder lösbar, vorzugsweise durch Schraubverbindungen, verbunden ist.

3. Untergestell (1) nach Anspruch 1 oder 2, **dadurch gekennzeichnet, dass** die Verbindungsstruktur (2C) zwei zueinander geneigte ebene Fachwerkstrukturen aufweist.

4. Untergestell (1) nach Anspruch 1, 2 oder 3, **dadurch gekennzeichnet, dass** die unteren Längsträger (22) in einem mittleren Bereich (M2) des Rahmentragwerks bzw. des Zentralmoduls (2) parallel zu den oberen Längsträgern (21) und in einem Endbereich (E2) mit vorzugsweise gegeneinander geneigten unteren Längsträgersegmenten (225, 226) gegen die oberen Längsträger (21) verlaufen und/oder dass durch die Fachwerkprofile (25) im Endbereich wenigstens ein Dreieck gebildet wird, das einen spitzeren Winkel aufweist als die Dreiecke, die durch die Fachwerkprofile (24) im mittleren Bereich (M2) des Rahmentragwerks gebildet werden.

5. Untergestell (1) nach einem der Ansprüche 1 - 4, **dadurch gekennzeichnet, dass** die äusseren Tragstrukturen (2A, 2B) je wenigstens zwei voneinander beabstandete und miteinander verbundene ebene Fachwerkstrukturen (2A1, 2A2; 2B1, 2B2) aufweisen, die vorzugsweise durch Verbindungsteile miteinander verbunden sind, die integrale Bestandteile der Fachwerkprofile (24, 25) der beiden ebenen Fachwerkstrukturen (2A1, 2A2; 2B1, 2B2) sind.

6. Untergestell (1) nach einem der Ansprüche 1 - 5, **dadurch gekennzeichnet, dass** die oberen Längsträger (21) ein U-Profil mit ersten und zweiten Seitenstücken (211), die durch ein Mittelstück (210) miteinander verbunden sind, aufweisen, und dass die unteren Längsträger (22) ein U-Profil mit ersten und zweiten Seitenstücken (221), die durch ein Mittelstück (220) miteinander verbunden sind, aufweisen und dass die oberen Längsträger (21) und/oder die unteren Längsträger (22) mit einem einteiligen oder mehrteiligen Verstärkungsband (218) versehen sind, das innerhalb des betreffenden U-Profils gehalten ist.

7. Untergestell (1) nach Anspruch 6, **dadurch gekennzeichnet, dass** die Fachwerkprofile (24, 25) ein U-Profil mit ersten und zweiten Seitenstücken (241) aufweisen, die durch ein Mittelstück (242) miteinander verbunden sind, dass die ersten Seitenstücke (241) der Fachwerkprofile (24, 25) in einer ersten Fachwerkebene endseitig an Knotenpunkten mit den korrespondierenden ersten Seitenstücken (211; 221) des zugewandten oberen oder unteren Längsträgers (21; 22) verbunden sind, und dass die zweiten Seitenstücke (241) der Fachwerkprofile (24, 25) in einer zweiten Fachwerkebene endseitig an Knotenpunkten mit den korrespondierenden zweiten Seitenstücken (211; 221) des zugewandten oberen oder unteren Längsträgers (21; 22) verbunden sind.

8. Untergestell (1) nach einem der Ansprüche 1 - 7, **dadurch gekennzeichnet, dass** die Verbindungsstruktur (2C) mehrere seriell aneinander anschliessende Strukturgruppen (29) umfasst, die vier Diagonalstreben (293) aufweisen, die vorzugsweise eine Pyramide bilden und die mit einem zweiten Anschlussflansch (2932) mit dem zugeordneten unteren oder oberen Längsträger (21; 22) und einem ersten Anschlussflansch (2931) miteinander sowie mit einer einteiligen oder mehrteiligen Transversalstrebe (292) verbunden sind, die den oberen oder unteren Längsträger (22; 21) miteinander verbindet und/oder dass jeweils zwei Diagonalstreben (293) zusammen mit dem zugeordneten Längsträger (21, 22) und gegebenenfalls unter Einschluss der Transversalstrebe (292) ein Dreieck (D1_{C1}, D2_{C1}; D1_{C2}, D2_{C2}) bilden.

9. Untergestell (1) nach Anspruch 8, **dadurch gekennzeichnet, dass** zumindest einige der Diagonalstreben (293) und der Fachwerkprofile (24) in einer Ebene angeordnet sind und die Fachwerkstrukturen der äusseren Tragstrukturen (2A, 2B) und der Verbindungstruktur (2C) zumindest annähernd deckungsgleich zueinander angeordnet sind.

10. Untergestell (1) nach Anspruch 8 oder 9, **dadurch gekennzeichnet, dass** die Transversalstreben (292) beidseitig durch Anschlussplatten (291) mit den zugeordneten oberen oder unteren Längsträgern (21, 22) verbunden sind und dass auf wenigstens einigen der Anschlussplatten (291) wenigstens ein Tragzapfen (19) fest oder drehbar angeordnet ist.

11. Untergestell (1) nach einem der Ansprüche 1 - 10, **dadurch gekennzeichnet, dass** die Fachwerkprofile (24, 25) und die oberen und unteren Längsträger (21, 22) und gegebenenfalls die Diagonalstreben (293) an den Knotenpunkten mit oberen und unteren Knotenplatten oder Knotenblechen (281, 282, 283) verschweisst oder verschraubt sind.

12. Untergestell (1) nach Anspruch 2, **dadurch gekennzeichnet, dass** zumindest eines der Kopfmodule (3) mit einer Kopplungsvorrichtung (11), insbesondere einer Laufwerkskopplung bzw. Drehgestellkopplung, versehen ist.

13. Untergestell (1) nach Anspruch 2 oder 12, **dadurch gekennzeichnet, dass** zumindest eines der Kopfmodule (3) eine einteilige oder mehrteilige obere Trägerplatte (31), die an den oberen Längsträger (21) anschliesst, und eine einteilige oder mehrteilige untere Trägerplatte (32) aufweist, die an den unteren Längsträger (22) anschliesst.

14. Untergestell (1) nach Anspruch 13, **dadurch gekennzeichnet, dass** zumindest eines der Kopfmodule (3) eine Kastenstruktur (30) mit mehreren Kasten (301, 302, 303, 304) aufweist und die oben und unten vorzugsweise durch die Trägerplatten (31, 32) abgedeckt sind.

15. Fahrzeug, insbesondere Schienenfahrzeug oder Lastwagen mit einem Untergestell nach einem der Ansprüche 1 - 14.

## Claims

1. Underframe (1) for a vehicle (10), in particular a rail vehicle or a truck, having a frame structure which is aligned along a longitudinal axis (x) and comprises two outer supporting structures (2A, 2B) which are connected to one another by a connecting structure (2C), the outer supporting structures (2A, 2B) are constructed as spatial or planar truss structures which comprise serially interconnected truss profiles (24, 25) which interconnect an upper longitudinal girder (21) and a lower longitudinal girder (22) in such a way that in each case two adjacent truss profiles (24, 25) together with the upper or lower longitudinal girder (21; 22) form a triangle (D1_{A1}, D2_{A1}; D1_{A2}, D2_{A2}) with three nodes, **characterised in that** the connecting structure (2C) is a spatial truss structure.

2. Underframe (1) according to claim 1, **characterised in that** the frame structure is a central module (2) which is connected in the direction of the longitudinal axis (x) at the front and at the rear to a head module (3) in a fixed or detachable manner, preferably by screw connections.

3. Underframe (1) according to claim 1 or 2, **characterised in that** the connecting structure (2C) comprises two mutually inclined plane truss structures.

4. Underframe (1) according to claim 1, 2 or 3, **characterised in that** that the lower longitudinal girders (22) extend in a central region (M2) of the frame structure or of the central module (2) parallel to the upper longitudinal girders (21) and in an end region (E2) extend with lower longitudinal girder segments (225, 226), which are preferably inclined towards one another, against the upper longitudinal members (21) and/or **in that** at least one triangle is formed by the truss profiles (25) in the end region, which triangle comprises a more acute angle than the triangles formed by the truss profiles (24) in the middle region (M2) of the frame structure.

5. Underframe (1) according to one of the claims 1 - 4, **characterised in that** the outer supporting structures (2A, 2B) each comprise at least two planar truss structures (2A1, 2A2; 2B1, 2B2) which are spaced apart from one another and which are connected to one another and which are preferably connected to one another by connecting parts that are integral components of the truss profiles (24, 25) of the two planar truss structures (2A1, 2A2; 2B1, 2B2).

6. Underframe (1) according to one of the claims 1 - 5, **characterised in that** the upper longitudinal girders (21) comprise a U-profile with first and second side pieces (211) connected to each other by a centre piece (210), and that the lower longitudinal girders (22) comprise a U-profile with first and second side pieces (221), connected to each other by a central piece (220), and **in that** the upper longitudinal members (21) and/or the lower longitudinal members (22) are provided with a one-piece or multi-piece reinforcing strip (218) which is held within the respective U-profile.

7. Underframe (1) according to claim 6, **characterised in that** the truss profiles (24, 25) comprise a U-profile with first and second side pieces (241) which are connected to one another by a centre piece (242), **in that** the first side pieces (241) of the truss profiles (24, 25) are connected in a first framework plane at the ends at nodal points to the corresponding first side pieces (211; 221) of the facing upper or lower longitudinal member (21; 22), and **in that** the second side pieces (241) of the truss profiles (24, 25) are connected in a second truss plane at the ends at node points to the corresponding second side pieces (211; 221) of the facing upper or lower longitudinal member (21; 22).

8. Underframe (1) according to one of the claims 1 - 7, **characterised in that** the connecting structure (2C) comprises a plurality of serially adjoining structural groups (29) that comprise four diagonal struts (293), which preferably form a pyramid and which are connected by a second connecting flange (2932) to the associated lower or upper longitudinal girder (21; 22) and which are connected by a first connecting flange (2931) with one another as well as with a one-piece or multi-piece transverse strut (292) that connects the upper or lower longitudinal girder (22; 21) to each other and/or **in that** in each case two diagonal struts (293) together with the associated longitudinal member (21, 22) and possibly including the transverse strut (292) form a triangle (D1_{C1}, D2_{C1}; D1_{C2}, D2_{C2}).

9. Underframe (1) according to claim 8, **characterised in that** at least some of the diagonal struts (293) and the truss profiles (24) are arranged in one plane and the truss structures of the outer supporting structures (2A, 2B) and the connecting structure (2C) are arranged at least approximately congruent with each other.

10. Underframe (1) according to claim 8 or 9, **characterised in that** the transverse struts (292) are connected on both sides by connecting plates (291) to the associated upper or lower longitudinal girders (21, 22) and that on at least some of the connecting plates (291) at least one support pin (19) is arranged in a fixed or rotatable manner.

11. Underframe (1) according to one of the claims 1 - 10, **characterised in that** the truss profiles (24, 25) and the upper and lower longitudinal girders (21, 22) and, if necessary, the diagonal struts (293) are welded or screwed to upper and lower gusset plates or gusset plates (281, 282, 283) at the nodes.

12. Underframe (1) according to claim 2, **characterised in that** at least one of the head modules (3) is provided with a coupling device (11), in particular a running gear coupling or bogie coupling.

13. Underframe (1) according to claim 2 or 12, **characterised in that** at least one of the head modules (3) comprises a one-piece or multi-piece upper support plate (31) adjoining the upper longitudinal member (21) and a one-piece or multi-piece lower support plate (32) adjoining the lower longitudinal member (22).

14. Underframe (1) according to claim 13, **characterised in that** at least one of the head modules (3) comprises a box structure (30) with several boxes (301, 302, 303, 304) which are preferably covered above and below by the support plates (31, 32).

15. Vehicle, in particular rail vehicle or truck with an underframe according to one of the claims 1 - 14.

## Revendications

1. Châssis (1) pour un véhicule (10), en particulier un véhicule ferroviaire ou un camion, avec une structure porteuse de cadre orientée le long d'un axe longitudinal (x), qui présente deux structures porteuses extérieures (2A, 2B) qui sont reliées entre elles par une structure de liaison (2C), les structures porteuses extérieures (2A, 2B) sont construites sous forme de structures en treillis spatiales ou planes, qui présentent des profilés de treillis (24, 25) reliés en série les uns aux autres, qui relient entre eux un longeron supérieur (21) et un longeron inférieur (22) de telle sorte que deux profilés de treillis (24, 25) voisins sont respectivement reliés, avec le longeron supérieur ou inférieur (21; 22) forment un triangle (D1_{A1}, D2_{A1}; D1_{A2}, D2_{A2}) avec trois points de jonction, **caractérisé en ce que** la structure de liaison (2C) est une structure spatiale en treillis.

2. Châssis (1) selon la revendication 1, **caractérisé en ce que** la structure porteuse du cadre est un module central (2) qui, dans la direction de l'axe longitudinal (x), est relié à l'avant et à l'arrière à un module de tête (3) de manière fixe ou amovible, de préférence par des liaisons vissées.

3. Châssis (1) selon la revendication 1 ou 2, **caractérisé en ce que** la structure de liaison (2C) présente deux structures planes en treillis inclinées l'une par rapport à l'autre.

4. Châssis (1) selon la revendication 1, 2 ou 3, **caractérisé en ce que** les longerons inférieurs (22) sont disposés dans une zone centrale (M2) de la structure porteuse du cadre ou du module central (2) s'étendent parallèlement aux longerons supérieurs (21) et dans une zone d'extrémité (E2) avec des segments de longerons inférieurs (225, 226), qui s'inclinent de préférence l'un par rapport à l'autre, contre les longerons supérieurs (21) et/ou **en ce qu'**il est formé par les profilés de treillis (25) dans la zone d'extrémité au moins un triangle qui présente un angle plus aigu que les triangles qui sont formés par les profilés de treillis (24) dans la zone centrale (M2) de la structure porteuse du cadre.

5. Châssis (1) selon une des revendications 1 - 4, **caractérisé en ce que** les structures porteuses extérieures (2A, 2B) comportent chacune au moins deux structures planes en treillis (2A1, 2A2; 2B1, 2B2) espacées l'une de l'autre et reliées entre elles, de préférence reliées entre elles par des pièces de liaison qui font partie intégrante des profilés en treillis (24, 25) des deux structures planes en treillis (2A1, 2A2; 2B1, 2B2).

6. Châssis (1) selon une des revendications 1 - 5, **caractérisé en ce que** les longerons supérieurs (21) comportent un profilé en U avec des première et deuxième pièces latérales (211) reliées entre elles par une pièce centrale (210), et **en ce que** les longerons inférieurs (22) comportent un profilé en U avec des première et deuxième pièces latérales (221), qui sont reliés entre eux par une pièce centrale (220), et **en ce que** les longerons supérieurs (21) et/ou les longerons inférieurs (22) sont pourvus d'une bande de renforcement (218) en une ou plusieurs parties qui est maintenue à l'intérieur du profilé en U concerné.

7. Châssis (1) selon la revendication 6, **caractérisé en ce que** les profilés de treillis (24, 25) présentent un profilé en U avec des premières et des deuxièmes pièces latérales (241) qui sont reliées entre elles par une pièce centrale (242), **en ce que** les premières pièces latérales (241) des profilés de treillis (24, 25) sont reliées, dans un premier plan de treillis, du côté des extrémités aux points de jonction, aux premières pièces latérales correspondantes (211; 221) du longeron supérieur ou inférieur (21; 22) qui leur fait face, et **en ce que** les deuxièmes pièces latérales (241) des profilés de treillis (24, 25) sont reliées, dans un deuxième plan de treillis, à leurs extrémités, au niveau des points de jonction, aux deuxièmes pièces latérales (211; 221) correspondantes du longeron supérieur ou inférieur (21; 22) qui leur fait face.

8. Châssis (1) selon une des revendication 1 - 7, **caractérisé en ce que** la structure de liaison (2C) comprend plusieurs groupes structurels (29) disposés en série, qui comprennent quatre entretoises diagonales (293), qui forment de préférence une pyramide et qui sont reliées par une deuxième bride de liaison (2932) à la longeron supérieure ou inférieure associée (21; 22) et qui sont reliés entre eux par une première bride de raccordement (2931) ainsi qu'avec une traverse (292) en une ou plusieurs parties reliant entre eux les longerons supérieurs ou inférieurs (22; 21) et/ou **en ce que** deux entretoises diagonales (293) forment chaque fois un triangle (D1_{C1}, D2_{C1}; D1_{C2}, D2_{C2}) avec le longeron associé (21, 22) et éventuellement avec la traverse (292).

9. Châssis (1) selon la revendication 8, **caractérisé en ce qu'**au moins une partie des entretoises diagonales (293) et des profilés en treillis (24) sont disposés dans un plan et les structures en treillis des structures porteuses extérieures (2A, 2B) et de la structure de liaison (2C) sont disposées de manière au moins approximativement congruente les unes par rapport aux autres.

10. Châssis (1) selon la revendication 8 ou 9, **caractérisé en ce que** les entretoises transversales (292) sont reliées des deux côtés par des plaques de raccordement (291) aux longerons supérieurs ou inférieurs (21, 22) associés et **en ce qu'**au moins un tourillon porteur (19) est également disposé de manière fixe ou rotative sur au moins certaines des plaques de raccordement (291).

11. Châssis (1) selon une des revendications 1 - 10, **caractérisé en ce que** les profilés de treillis (24, 25) et les longerons supérieurs et inférieurs (21, 22) et éventuellement les entretoises diagonales (293) sont soudés ou vissés aux points de jonction avec des goussets ou des plaques de jonction supérieurs et inférieurs (281, 282, 283) .

12. Châssis (1) selon la revendication 2, **caractérisé en ce qu'**au moins l'un des modules de tête (3) est pourvu d'un dispositif de couplage (11), en particulier d'un couplage de train de roulement ou d'un couplage de bogie.

13. Châssis (1) selon la revendication 2 ou 12, **caractérisé en ce qu'**au moins l'un des modules de tête (3) comprend une plaque de support supérieure (31) en une ou plusieurs parties, qui est raccordée au longeron supérieur (21), et une plaque de support inférieure (32) en une ou plusieurs parties, qui est raccordée au longeron inférieur (22).

14. Châssis (1) selon la revendication 13, **caractérisé en ce qu'**au moins l'un des modules de tête (3) présente une structure en caissons (30) comprenant plusieurs caissons (301, 302, 303, 304) et qui sont de préférence recouverts en haut et en bas par les plaques de support (31, 32).

15. Véhicule, notamment véhicule ferroviaire ou camion, comportant un châssis selon une des revendications 1 - 14.
